# EUROPEAN PATENT SPECIFICATION

(11) **EP 3 276 238 B1**
(45) Date of publication and mention of the grant of the patent: **07.06.2023**
(21) Application number: 17183813.9
(22) Date of filing: 28.07.2017
(51) Int. Cl.: F16L 21/035, F16L 21/08, F24F 13/02, F16L 25/00

(54) **DUCT CONNECTOR AND METHOD FOR SEALING DUCT COMPONENTS**
ROHRVERBINDER UND VERFAHREN ZUM ABDICHTEN VON ROHRKOMPONENTEN
CONNECTEUR DE CONDUITS ET PROCÉDÉ DE SCELLEMENT D'ÉLÉMENTS DE CONDUITS

(30) Priority: 28.07.2016 GB 201613060
(43) Date of publication of application: 31.01.2018
(73) Proprietor: Polypipe Limited, Doncaster, Yorkshire DN12 1ES (GB)
(72) Inventor: REANEY, Matthew, Dronfield, S18 1SU (GB)
(74) Representative: Marks & Clerk LLP

(56) References cited:
- EP-A1- 2 759 779
- DE-U1- 29 911 322
- US-A- 4 318 547
- US-A1- 2002 153 725
- US-A1- 2011 049 874
- US-B1- 6 322 111

## Description

### Field of the Invention

The invention relates to a connection and method for sealing ducting using a duct connector. In particular, the invention relates to sealing ventilation ducting.

### Background to the Invention

Ventilation ducting carries air or other gases to and from locations such as bathrooms in houses. Air can be pumped or blown through the ducting in a specific direction or can flow naturally. Ventilation duct systems are made from a number of ducts that are connected together in some manner to form the completed ducting system. In many cases, there can be leaks between the ducts or duct fittings at the connections which allow air or particles to enter into the ducting or escape into locations where it is not desired.

The present invention has therefore been devised with the foregoing in mind. The invention seeks to overcome or ameliorate at least one of the disadvantages of the prior art, or provide a useful alternative. US2011049874 (A1) discloses a polymeric pipe fitting and gasket assembly and sealed polymeric pipe apparatus formed therewith.

### Summary of the Invention

In accordance with a first aspect of the present invention, there is provided a duct connector for sealing duct components comprising a duct member, and a seal member. The duct member is hollow, is open at a first end and has a length extending away from the first end, and the seal member is located around an outer circumference of the duct member, the seal member being for forming a seal between the duct member and a duct component. This has the advantage of stopping air or particles from entering or exiting the ducting.

The seal is an external seal around the outer circumference of the duct component substantially transverse to the length, the seal member is for forming the external seal. This has the advantage of forming seals with ducts.

The duct connector further comprises a collar for compressing the seal member onto the duct component to form the external seal. The advantage of this is that it is a quick and non-permanent method for connecting and sealing ducts.

The collar may be located around an outer circumference of the seal member. In other embodiments, the collar is not located around an outer circumference of the seal member.

The collar is slidable in a lengthwise direction of the duct member from an unsealed position to a sealed position, closer to the first end of the duct member, to compress the seal member onto the duct component to form the external seal. This has the advantage of versatility and re-usability. This may be the case whether or not the collar is located around an outer circumference of the seal member.

The collar may be slidable from the sealed position to the unsealed position for insertion of the duct member into the duct component. This is a very simple and quick method to form the external seal around the duct.

A circumferential length of the seal member transverse to the length of the duct member may increase towards the end of the seal member nearest the first end of the duct member. This allows the duct member to be more easily inserted into the duct.

The seal member may comprise at least one inwardly and transversely extending rib for forming the external seal. This provides a tight seal.

The seal member may be located at, or near, the first end of the duct member.

The duct member may have an internal crosspiece extending at least partway along the length of the duct member. This has the advantage of providing additional strength to the duct member and helps maintain its shape. This in turn improves the performance of the seal.

The seal member may be at least partially rubber.

The seal member may be attached to the duct member by a clip. This secures the seal member into position on the duct member.

The clip may be configured to attach the seal member at the end of the seal member furthest from the first end of the duct member.

The clip may be configured to press the seal member onto the duct member to seal the seal member to the duct member.

The clip may comprise a first retaining clip part and a second retaining clip part.

The seal may be airtight and/or watertight.

The duct member may be a duct stiffener.

The duct component may be a duct or a duct fitting.

The duct connector may further comprise a corresponding second seal member located around an outer circumference of the duct member, the duct member being open at a second end, opposite to the first end of the duct member, the second seal member may be configured to form a corresponding seal between the duct member and a second duct component at the second end of the duct member. This has the advantage of sealing two duct components with each other.

The duct connector may be a duct-to-duct connector.

The duct component may be a duct and the second duct component may be a duct, and the seal member and second seal member may be configured to form corresponding external seals.

The duct connector may be a duct-to-duct fitting connector.

The duct component may be a duct and the second duct component may be a duct fitting and the seal member may be configured to form the external seal and the second seal member may be configured to form a corresponding internal seal.

The second seal may be an internal seal around the internal circumference of the duct component substantially transverse to the length, the second seal member may be for forming the internal seal. This has the advantage of forming seals with duct fittings.

The second seal member may comprise at least one outwardly and transversely extending rib for forming the internal seal. This has the advantage of helping to provide a tight seal and resist removal of the duct component.

The second seal member may comprise three outwardly extending ribs.

An end portion of the second seal member may extend at least partially across the end face of the first end of the duct member.

The end portion of the second seal member may, or may not, extend around the end face of the first end of the duct member and may extend away from the first end of the duct member along the internal circumference of the duct member. This helps hold the second seal member onto the duct member.

The second seal member may be located at, or near, the second end of the duct member.

The second seal member may be attached to the duct member by the clip.

The clip may be additionally configured to attach the second seal member at the end of the second seal member furthest from the second end of the duct member.

The duct connector may further comprise a fixing member for fixing the duct connector to a surface. This improves the ease of installation.

The duct connector may comprise a loop for attachment of the fixing member. The fixing member being secured in this way is advantageous because it frees up the installer's hands to position the duct system and use tools for fixing the duct system.

The duct connector may comprise a U-shaped clip for holding the fixing member in a direction transverse to the length of the duct member, whether or not the duct connector comprises a loop for attachment of the fixing member.

The duct member may be a common platform for forming both internal and external seals. This has the advantage of versatility as the correct seal can be used as required by the circumstances and also manufacturing/tooling costs can be reduced. Only one type of duct member is required in order to form both the internal and external seals.

In accordance with a second aspect of the present invention, there is provided a method for sealing duct components using a duct connector comprising: positioning a seal member around an outer circumference of a duct member, the duct member being hollow and being open at a first end of the duct member; inserting the duct member into the duct component such that the seal member forms a seal between the duct member and the duct component at the first end of the duct member. This has the advantage of being a simple and quick method to seal ducting.

The method further comprises: the seal member forming an external seal around the outer circumference of the duct component.

The method further comprises: compressing the seal member onto the duct component to form the external seal between the duct member and the duct component using a collar.

The method further comprises: sliding the collar from an unsealed position to a sealed position, closer to the first end of the duct member, to deform the seal member and form the external seal.

The method may further comprise: sliding the collar to the unsealed position from the sealed position, and/or maintaining the collar in the unsealed position whilst inserting the duct member into the duct component.

A circumferential length of the seal member transverse to the length of the duct member may increase towards the end of the seal member nearest the first end of the duct member.

The method may further comprise: a second seal member forming an internal seal around the inner circumference of the duct component.

The method may further comprise: positioning a seal member at, or near, a first end of the duct member.

The method may further comprise: attaching the seal member to the duct component using a clip.

The method may further comprise: attaching the seal member at the end of the seal member furthest from the first end of the duct member using the clip.

The method may further comprise: pressing the seal member onto the duct member to seal the seal member to the duct member using the clip.

The method may further comprise: attaching the seal member by using the clip comprising a first retaining clip and a second retaining clip.

The method may further comprise: positioning a corresponding second seal member around an outer circumference of the duct member, the duct member being open at a second end, opposite to the first end of the duct member;
inserting the duct member into a second duct component such that the second seal member forms a corresponding seal between the duct member and a second duct component at the second end of the duct member.

In accordance with a third aspect of the present invention, there is provided a duct system comprising: a duct connector as described above and a duct component.

The duct component may be a duct or a duct fitting.

### Brief Description of the invention

An embodiment of the invention will now be described, by way of example only, with reference to the accompanying drawings in which:
Figure 1 shows an exploded perspective view of a duct connector in accordance with a first embodiment of the present invention.
Figure 1A shows a perspective view of the assembled duct connector of Figure 1 including fixing members.
Figure 1B shows a transverse cross section view of the duct connector of Figure 2 without the fixing members.
Figure 2 shows a perspective view of a duct system including the assembled duct connector of the embodiment of Figure 1 and two ducts.
Figure 3 shows a cross section view of the duct connector taken through line A-A of Figure 2.
Figure 4 shows a perspective view of the assembled duct system including the duct connector of Figure 1 and two ducts.
Figure 5 shows a cross section view of the duct system taken through line B-B of Figure 4.
Figure 6 shows a perspective view of the sealed duct system of Figure 2.
Figure 7 shows a cross section view of the sealed duct system taken through line C-C of Figure 6.
Figure 8 shows an exploded perspective view of a duct connector in accordance with a second embodiment of the present invention.
Figure 9 shows a perspective view of a duct system including the assembled duct connector of Figure 8, a duct and a duct fitting.
Figure 10 shows an axial cross section view of the duct system of Figure 9.
Figure 11 shows a perspective view of the sealed duct system of Figure 9.
Figure 12 shows a cross section view of the sealed duct system taken through line D-D of Figure 11.
Figure 13 shows an exploded perspective view of a duct connector in accordance with an example.
Figure 14 shows a perspective view of an assembled sealed duct system including the duct connector of Figure 13, and two duct fittings.
Figure 15 shows a cross section view of the sealed duct system taken through line E-E of Figure 14.

### Description of the embodiments of the invention

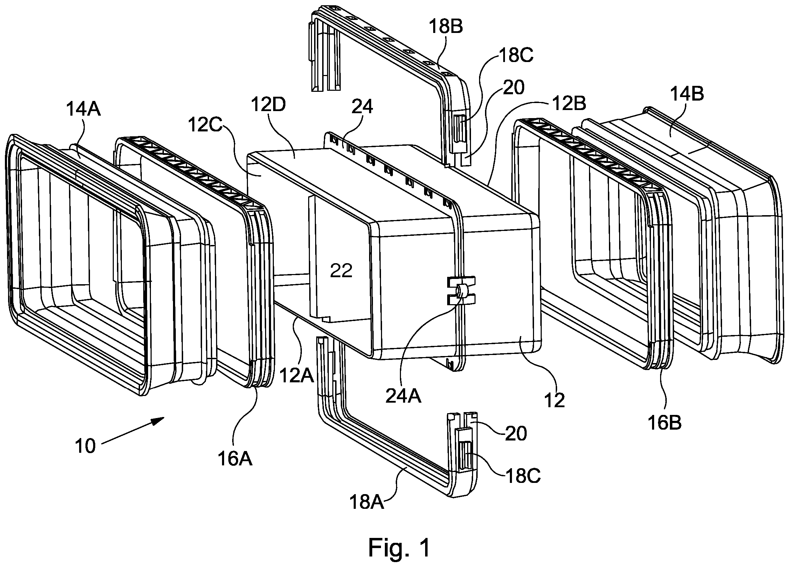

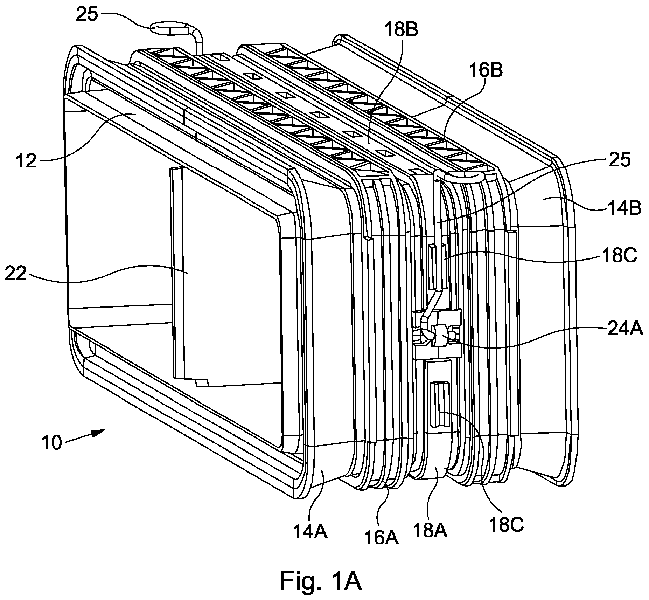

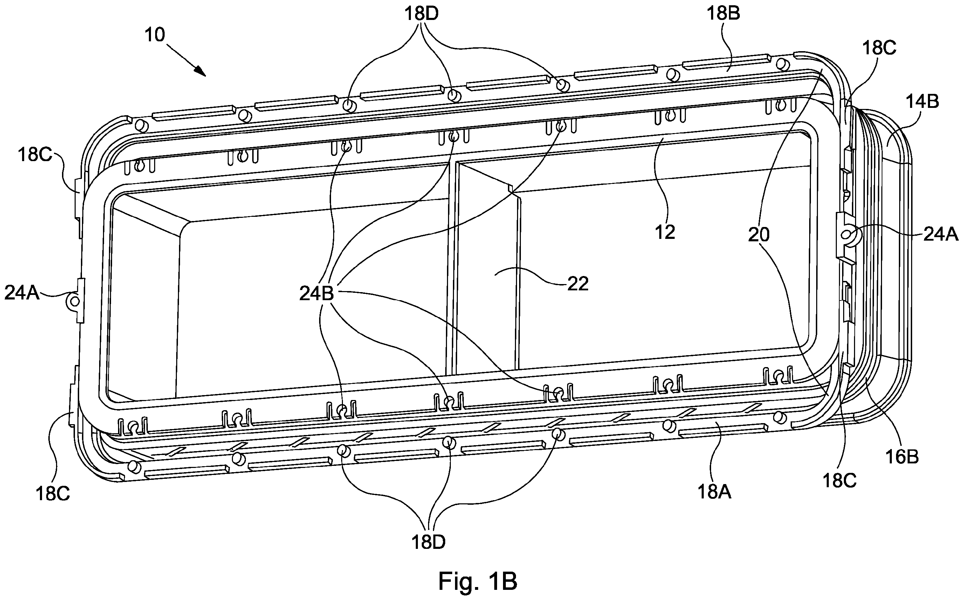

Figure 1 shows an exploded view of a duct connector 10 for connecting and sealing duct components, such as ducts or duct fittings. In this embodiment, the duct connector 10 is for connecting two ducts, i.e. is a duct-to-duct connector. The duct connector 10 includes a duct stiffener 12 (a duct member) for locating a first seal member 14A and a second seal member 14B. The duct connector 10 further includes a first collar 16A and a second collar 16B for compressing the seal members 14A, 14B, and a clip comprising a first retaining clip part 18A and a second retaining clip part 18B for attaching the seal members 14A, 14B, to the duct stiffener. The pair of retaining clip parts 18A, 18B, together form the clip 20. The seal members 14A, 14B, are moulded. The seal members 14A, 14B, are made from rubber. The rubber could be natural, synthetic or silicone. In other embodiments, the seal members could be made from a thermoplastic elastomer (TPE) or any other suitable flexible material. The duct stiffener 12, collars 16A, 16B, and clip 20 are moulded in suitable thermoplastics.

The duct stiffener 12 is a conduit having a length with a substantially rectangular cross section (with curved corners), i.e. the duct stiffener 12 is hollow and has an open end at a first end 12A of the duct stiffener 12 and an open end at a second end 12B of the duct stiffener 12. Thus, the duct stiffener 12 has an inner surface 12C and a corresponding outer surface 12D. In other embodiments, the cross section of the duct stiffener 12 may be circular or another suitable shape. In the case of a circular duct, a similar type of connector including a duct stiffener would be beneficial. The duct stiffener is less likely to need an internal crosspiece and it may not be common platform between duct-to-duct and duct-to-duct fitting connectors.

In the following description, the top and bottom of the duct stiffener 12 are taken to be the long side of the rectangular cross section while the two sides are taken to be the short sides of the rectangular cross section. The length of the duct stiffener 12 is taken in the direction from the first end 12A of the duct stiffener 12 to the second end 12B of the duct stiffener 12. The width of the duct stiffener 12 is taken in the direction from one side of the duct stiffener 12 to the other side. The height of the duct stiffener 12 is taken in the direction from the bottom of the duct stiffener 12 to the top. The duct stiffener 12 has an inner circumference on the inner surface 12C taken around the top, bottom and two sides. The terms outer and outward refer to extending away from a notional axis inside the duct connector running in the length direction. The outer circumference of the duct stiffener 12 is taken on the corresponding outer surface 12D around the top, bottom and two sides. This direction convention will be applied to other components as well.

The duct stiffener 12 has an internal crosspiece 22 extending at least partway along the length of the duct stiffener 12. The internal crosspiece is in a laterally central position of the duct stiffener 12, with respect to the two sides of the duct stiffener 12. The internal crosspiece 22 extends between, and perpendicularly from, the top and bottom of the duct stiffener 12. The internal crosspiece 22 provides additional strength to the duct stiffener 12 and helps maintain its shape. This improves the performance of the seal.

The seal members 14A, 14B, are sized to fit around the outer circumference of the duct stiffener 12 and the collars 16A, 16B, are sized to fit around the outer circumference of the seal members 14A, 14B.

A clip mount 24 is provided around the outer circumference of the duct stiffener 12 substantially transverse to its length in a longitudinally central position of the duct stiffener 12, with respect to the first end 12A and second end 12B of the duct stiffener 12. The clip mount 24 extends away from the surface 12D of the duct stiffener 12 and also has loops 24A located transversely centrally on each side (only one shown). The loops 24A are open at the sides facing the first end 12A and second end 12B of the duct stiffener 12. The clip mount 24 allows the retaining clips 18A, 18B, to be fixed onto the duct stiffener 12 and also provides a stop for positioning the seal members 14A, 14B.

There are two U-shaped clips 18C located on each side of the retaining clips 18A, 18B. These U-shaped clips 18C extend transversely, i.e. are orientated in the direction from the bottom to the top of the duct stiffener 12. The loops 24A and U-shaped clips 18C allow the duct connector 10 to be fixed to a surface, commonly a surface above (i.e. the duct system 1 hangs from this surface).

Figure 1A shows fixing members 25 in the form of shaped wires which are secured to the duct connector 10 via the loops 24A and the U-shaped slips 18C. In this embodiment, the wires are made from stainless steel but, in other embodiments, different suitable materials could be used. One end of the fixing member 25 can be inserted into the loop 24A with the other end forming an eyelet which a screw or similar component can be passed through to secure the duct system 1 to a surface, such as a ceiling of a building. The middle section of the fixing member 25 is clipped into the U-shaped clip 18C. The fixing members 25 are attachable to, and detachable from, the duct connector 10.

The loops 24A are located transversely, and longitudinally, centrally with the U-shaped clips 18C on the clips 20 being located both above and below the loops 24A on each side. This means there is effectively no top or bottom to the duct connector 10 and its orientation is only set once the fixing member 25 is secured to it. The fixing member 25 being secured in this way is advantageous because it frees up the installer's hands to position the duct system 1 and use tools for fixing the duct system 1. Thus, a simple method of providing support to a duct system 1 at the joints, including bends and tees etc, is provided. In this embodiment, the length of the fixing member 25 allows for the duct system 1 to be secured relatively close to the surface above but, in other embodiments, longer fixing members could be used to lower the duct system 1 away from the surface above should it be required by the site conditions.

Figure 1B shows a transverse cross section taken through the duct connector 10 of Figure 1A at a longitudinally central position, i.e. one half of the retaining clips 18A, 18B, are shown. The fixing members 25 are not shown in Figure 1B. The retaining clips 18A, 18B have location pegs 18D which are sized to fit into corresponding holes 24B located at the top and bottom sides of the clip mount 24. These pegs 18D and corresponding holes 24B fix the clip 20 to the clip mount 24.

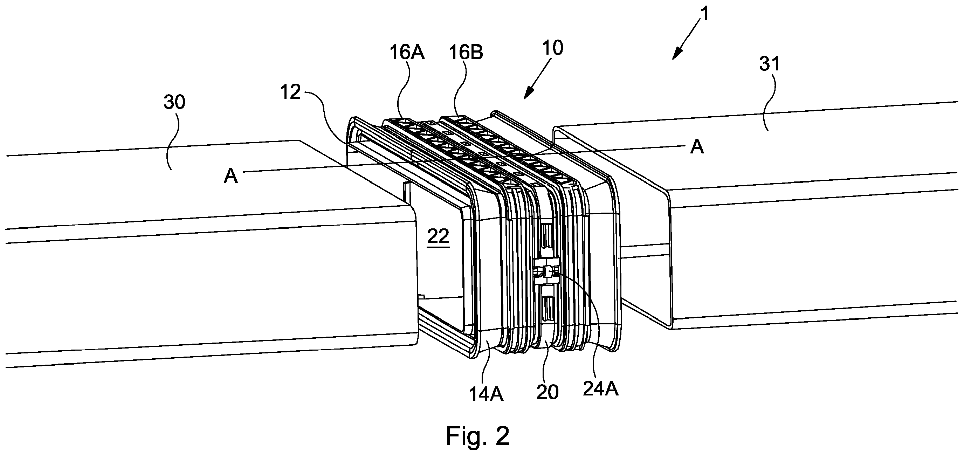

Figure 2 shows the assembled duct connector 10, along with two duct components: a first duct 30 (a first duct component) and a second duct 31 (a second duct component), which are to be connected together and sealed. The duct connector 10 and ducts 30, 31, together form a duct system 1. Figure 2 shows the first duct 30 and second duct 31 separated from each other, i.e. not connected, and the duct connector 10 located therebetween. The ducts 30, 31, are standard ducts and have a rectangular cross section similar to the duct stiffener 12. The inner circumference of the ducts 30, 31, is larger than the outer circumference of the duct stiffener 12 to allow the duct stiffener 12 to be inserted into the ducts 30, 31, as will be described in more detail later.

Figure 2 shows the first seal member 14A located around and encircling an outer circumference of the duct stiffener 12 at, or near, the first end 12A of the duct stiffener 12 and the second seal member 14B located around and encircling an outer circumference of the duct stiffener 12 at, or near, the second end 12B of the duct stiffener 12. The first seal member 14A is located, substantially transverse to the length of the duct stiffener 12, in the half of the duct stiffener 12 nearest the first end 12A of the duct stiffener 12 and the second seal member 14B is located, again substantially transverse of the length of the duct stiffener 12, in the half of the duct stiffener 12 nearest the second end 12B of the duct stiffener 12. That is, the first seal member 14A is located nearest the first end 12A of the duct stiffener 12 and the second seal member 14B is located nearest the second end 12B of the duct stiffener 12.

The clip 20 is shown positioned on the clip mount 24 to hold the seal members 14A, 14B, in position on the duct stiffener 12. The collars 16A, 16B, are shown located around an outer circumference of the respective seal members 14A, 14B, in an unsealed position, i.e. a longitudinally central position with respect to the first end 12A of the duct stiffener 12 and the second end 12B of the duct stiffener 12.

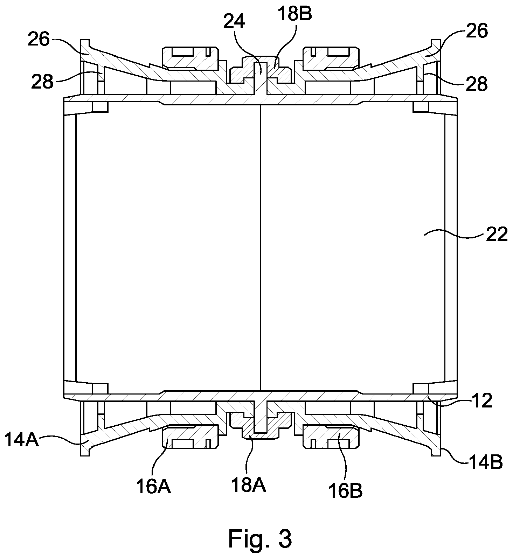

Figure 3 shows a cross section view of the components of the duct connector 10 assembled together taken along line A-A of Figure 2.

The seal members 14A, 14B, have an increasing outer circumference (flared shape 26) towards one of their ends, i.e. a circumferential length of the seal members 14A, 14B transverse to the length of the duct stiffener 12 increases towards one of the ends of the seal members 14A, 14B. For the seal member 14A, the flared shape 26 is at the end of the seal member 14A nearest the first end 12A of the duct stiffener 12, whilst for the seal member 14B, the flared shape 26 is at the end of the seal member 14B nearest the second end 12B of the duct stiffener 12. Thus, the seal members 14A, 14B have been moulded such that one of their ends extends further outward than the rest of the seal member 14A, 14B. This allows the duct connector 10 to slide onto the respective ducts 30, 31, more easily by reducing resistance between the seal members 14A, 14B, and the respective duct 30, 31. In addition, the seal members 14A, 14B, both have an inwardly extending rib 28 located at the flared shape 26, which extends towards, but not all the way to, the duct stiffener 12.

The first stage of assembling the duct connector 10 is positioning the collars 16A, 16B, around the outer circumference of the seal members 14A, 14B by sliding the collars 16A, 16B, from the flared 26 ends of the seal members 14A, 14B until the collars 16A, 16B, come into contact with a portion extending outwardly, transverse of the length of the seal members 14A, 14B, which acts as a positioning stop. This position of the collars 16A, 16B, is the unsealed position, i.e. they are not in the position to compress the seal members 14A, 14B, to form the seals.

Further, the assembly of the duct connector 10 is continued by sliding the seal members 14A, 14B, onto their respective ends of the duct stiffener 12 and towards the longitudinal centre of the duct stiffener 12, with respect to the first end 12A and second end 12B of the duct stiffener 12, until they come into contact with the clip mount 24, which acts as a positioning stop.

Once both seal members 14A, 14B are in position, the two retaining clips 18A, 18B, are fixed to the clip mount 24 via the pegs 18D and holes 24B. The retaining clip 18A slides around the sides of the duct stiffener 12 from the bottom of the duct stiffener 12, with the leading edges sliding underneath the loops 24A on each side. The retaining clip 18B does likewise from the top of the duct stiffener 12. The clip 20 (formed from both the retaining clips 18A, 18B) traps both the seal members 14A, 14B, onto the duct stiffener 12 and attaches them securely.

The clip 20 attaches the first seal member 14A at the end of the first seal member 14A furthest from the first end 12A of the duct stiffener 12 and the second seal member 14B at the end of the second seal member 14B furthest from the second end 12B of the duct stiffener 12. The clip 20 presses the seal members 14A, 14B, onto the duct stiffener 12 to seal the seal members 14A, 14B, to the duct stiffener 12. That is, no air or water can escape past the attached ends of the seal members 14A, 14B. Thus the seals are airtight and watertight.

Referring back to Figure 2, the duct connector 10 is positioned between the two ducts 30, 31, that are to be connected and sealed. The duct connector 10 and the ducts 30, 31, are then moved towards each other in order to make the connection, with the collars 16A, 16B, being maintained in the unsealed position throughout the movement. That is, the ducts 30, 31, are pushed into both sides of the duct connector 10 with the collars 16A, 16B, in the unsealed position.

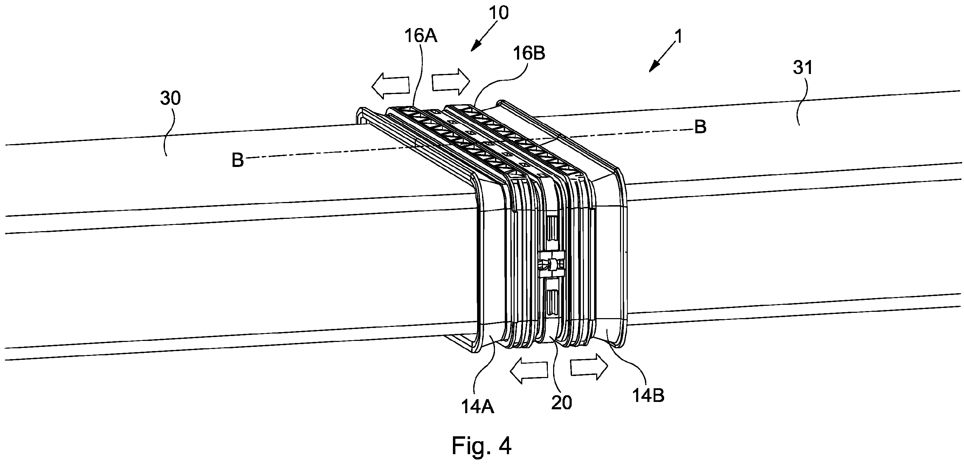

Figure 4 shows the assembled duct system 1 with duct connector 10 in position between the ducts 30, 31. The collars 16A, 16B, are in the unsealed position.

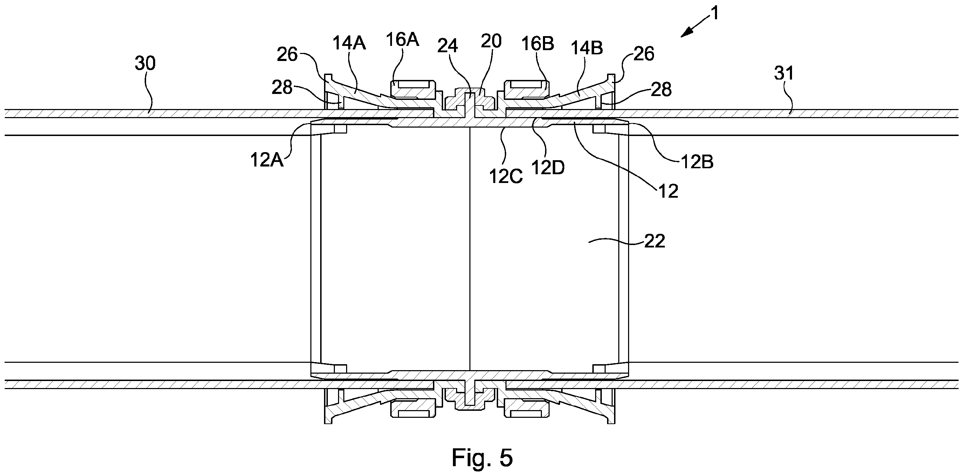

Figure 5 shows a cross section view of the assembled duct system 1 of the duct connector 10 and ducts 30, 31 taken along line B-B of Figure 4. The duct stiffener 12 is shown inserted into the ducts 30, 31, with the outer surface 12D of the duct stiffener being in contact with, or at least very close to, the inner surface of the ducts 30, 31. The duct 30 has been inserted into the duct connector 10 between the duct stiffener 12 and the seal member 14A. Similarly, the duct 31 has been inserted into the duct connector 10 between the duct stiffener 12 and the seal member 14B. The ducts 30, 31, are moved towards the duct connector 10 until the end faces of the ducts 30, 31, abut their respective seal members 14A, 14B. Although ideally the duct stiffener 12 is fully pushed into the duct (i.e. the end face of the duct comes into contact with the opposing surface of the respective seal member), this is not necessary to obtain a seal. That is, a reliable seal can still be created even if there has been a relatively poor level of installation or assembly, e.g. the duct ends are not cut square or evenly.

Once the duct stiffener 12 is fully inserted into the ducts 30, 31, and thus the ducts 30, 31, are fully inserted into the duct connector 10, the seal between the duct connector and the ducts 30, 31, can be made.

Referring back to Figure 4, the seal between the duct connector 10 and the first duct 30 is an external seal around the outer circumference of the first duct 30. The external seal is formed by sliding the first collar 16A from the unsealed position to a sealed position, closer to the first end 12A of the duct stiffener 12. That is, the first collar 16A is slidable and is moved in the direction of the arrows in Figure 4. This has the effect of deforming the first seal member 14A and pressing the first seal member 14A onto the outside of the first duct 30. In other words, compressing the first seal member 14A onto the outside of the first duct 30 to both grip the first duct 30 and create the external seal. Thus, the first seal member 14A forms the external seal between the duct stiffener 12 and the first duct 30 at the first end 12A of the duct stiffener 12.

The external seal around the outer circumference of the second duct 31 is formed in the same way by sliding the second collar 16B from the unsealed position to the corresponding sealed position, closer to the second end 12B of the duct stiffener 12 (in the direction of the arrows in Figure 4) to deform the second seal member 14B. Thus, the second seal member 14B forms the external seal between the duct stiffener 12 and the second duct 31 at the second end 12B of the duct stiffener 12.

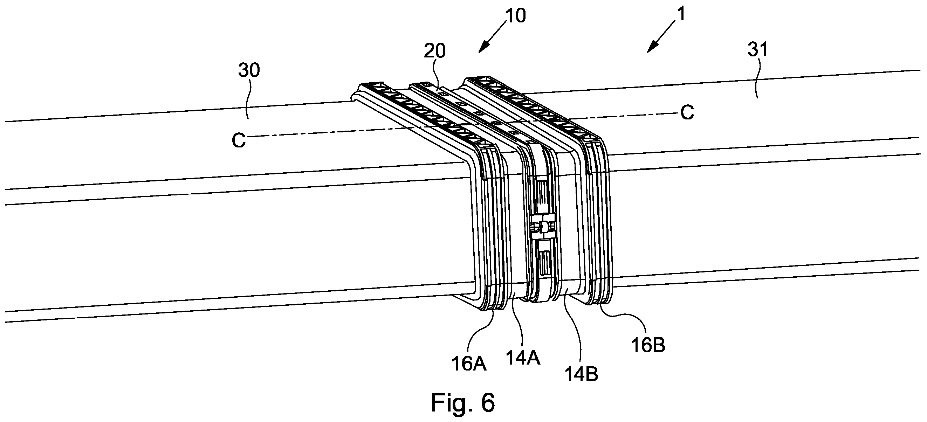

Figure 6 shows the assembled duct system 1 with the collars 16A, 16B, in the sealed position, i.e. the external seals around the ducts 30, 31 are formed by the duct connector 10. The sealed position of the collars 16A, 16B, is their most outwardly position, away from the longitudinal centre of the duct stiffener 12, with respect to the first end 12A and second end 12B of the duct stiffener 12.

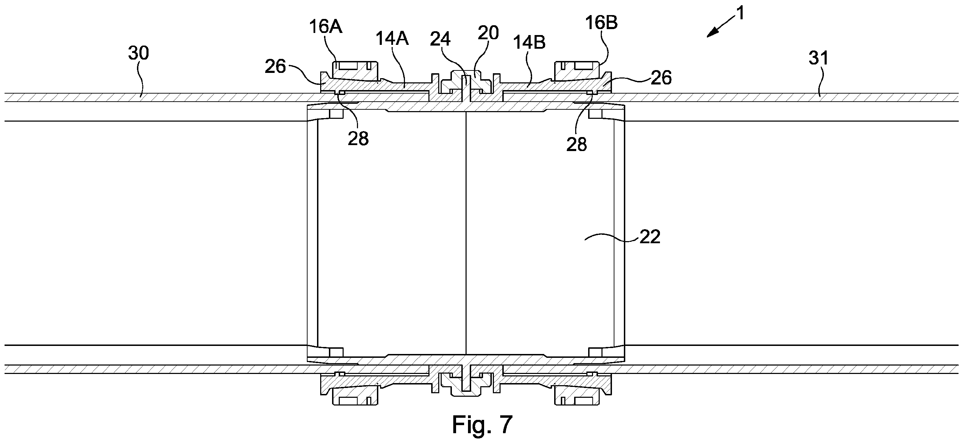

Figure 7 shows a cross section view of the assembled duct system 1 of the duct connector 10 and ducts 30, 31, taken along line C-C of Figure 6. The collars 16A, 16B, have been moved to the sealed position, closer to their respective ends 12A, 12B, of the duct stiffener 12, and have deformed the flared shape 26 on each seal member 14A, 14B, such that the flared shape 26 has been flattened towards the ducts 30, 31.

This means the transverse, inwardly extending ribs 28 come into contact with the respective ducts 30, 31, and will be deformed due to the pressure against the ducts 30, 31, which helps provide a strong air/water tight seal.

The sealing of the ducts 30, 31, is achieved by the first duct 30 being externally sealed to the duct stiffener 12 and the second duct 31 being externally sealed to the duct stiffener 12. More particularly, the clip 20 presses the seal members 14A, 14B, to the duct stiffener 12 and the collars 16A, 16B, force the seal members 14A, 14B, onto the ducts 30, 31 to form the seals. Thus, both the ducts 30, 31, are connected and sealed to the duct stiffener 12 which means the ducts 30, 31, are connected and sealed to each other by the duct connector 10. The external seals are airtight and watertight.

With the collars 16A, 16B, in their sealed position, the seal members 14A, 14B, grip the ducts 30, 31, and it is very difficult to remove the ducts 30, 31, from the duct connector 10. This avoids the problem of the ducts 30, 31, being accidently removed from the duct connector 10, i.e. by a collision or otherwise, and thus improves safety and performance of the duct system 1.

To remove the duct stiffener 12 from the ducts 30, 31, and thus remove the ducts 30, 31, from the duct connector 10, the collars 16A, 16B, are moved back to their unsealed position shown in Figure 5. Once the collars 16A, 16B are in their unsealed position, the ducts 30, 31, can be removed to return to the disassembled duct system 1 as shown in Figure 2. Thus, the duct connector 10 allows for a quick and non-permanent method for connecting and sealing ducts which has the advantages of versatility and re-usability.

In this embodiment, the duct connector 10 is a duct-to-duct connector. That is, both duct components are ducts, i.e. they are the same duct components. More particularly, the first duct component is the first duct 30 and the second duct component is the second duct 31. However, in other embodiments, either one or both of the duct components may be different, e.g. they may be duct fittings. In other embodiments, the duct components could be any other suitable equipment, such as an air-handling unit.

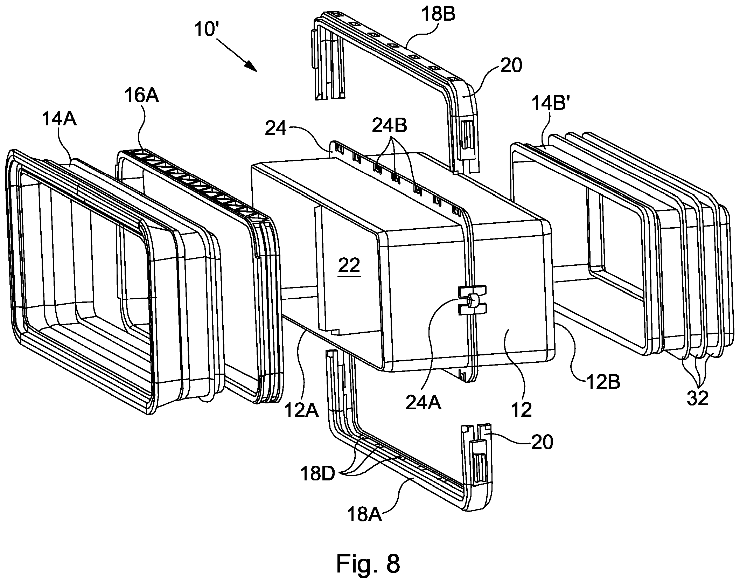

A second embodiment of the invention is shown in Figure 8 as an exploded view of a duct-to-duct fitting connector (duct connector 10'). The same reference numerals will be used for the same components as in the first embodiment with similar or corresponding components having numerals with an apostrophe (').

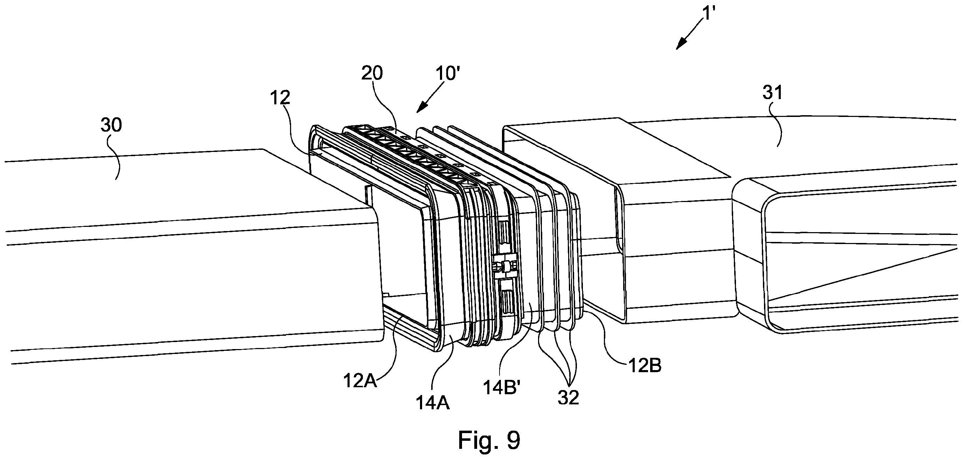

The duct stiffener 12 is the same as in the first embodiment (the duct-to-duct connector embodiment). This means that a common platform is provided that forms the basis of each variant of the invention. In the second embodiment, the first duct component is still a first duct 30, but the second duct component is a duct fitting 31' (shown in Figure 9). The duct connector 10' includes the loops 24A and U-shaped clips 18C so fixing members 25 can also be used with this variant of the invention in the same manner as described above.

The components and method for forming the external seal between the duct stiffener 12 and the duct 30 are the same as in the duct-to-duct connector embodiment and so will not be mentioned in more detail here.

The seal is formed between the duct stiffener 12 and the duct fitting 31' using a third seal member 14B'. The third seal member 14B' is different from the second seal member 14B. In particular, the third seal member 14B' does not have the flared shape 26 and the inwardly extending rib 28, but instead has three outwardly extending ribs 32, transverse to the length and spaced along the length of the third seal member 14B'. The third seal member 14B' is still sized to be positioned around the outer circumference of the duct stiffener 12 at, or near, the second end 12B of the duct stiffener 12.

The assembled duct connector 10' is shown in Figure 9, along with two duct components: a first duct 30 (a first duct component) and a first duct fitting 31' (a second duct component), which are to be connected together and sealed. The duct connector 10', the first duct 30 and the first duct fitting 31' form a duct system 1'. Although in this embodiment, the first duct 30 is sealed to the first end 12A of the stiffener 12 and the first duct fitting 31' is sealed to the second end 12B of the stiffener 12, it is clear that in other embodiments, the first duct 30 and the first duct fitting 31' could be switched by simply rotating the duct connector 10'. That is, defining a first end 12A and second end 12B' of the stiffener 12 is purely a useful convention to understand the invention because there is no real difference between the first end 12A and the second end 12B of the stiffener 12 until the sealing members 14A, 14B' are positioned.

The duct connecter 10' is assembled in a similar manner as in the duct-to-duct connector embodiment, by sliding the seal members 14A, 14B', onto their respective ends of the duct stiffener 12 and towards the centre of the duct stiffener 12 (with respect to the first end 12A and second end 12B of the duct stiffener 12) until they come into contact with the clip mount 24 which acts as a positioning stop.

The clip 20 attaches both the first seal member 14A and the third seal member 14B' to the duct stiffener 12 in the same way as in the duct-to-duct connector embodiment described above.

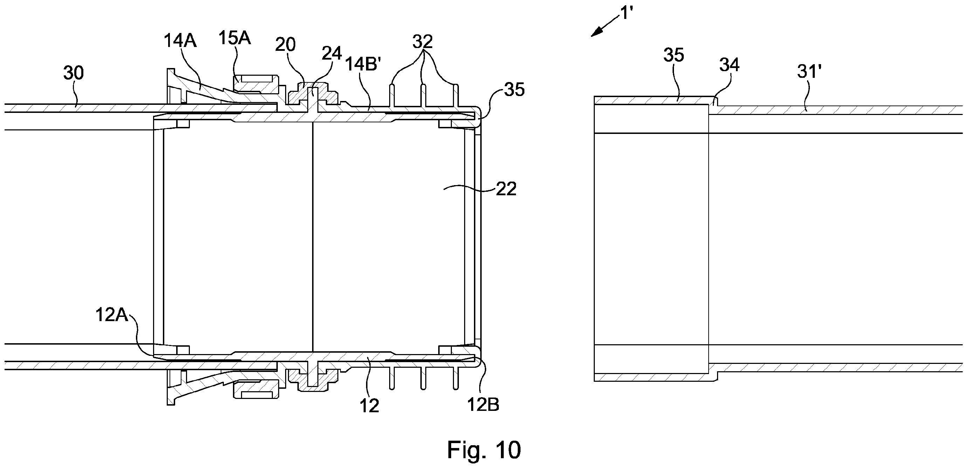

Figure 10 shows a cross section view of the duct system 1' before insertion of the duct connector 10' into the first duct fitting 31'. The duct stiffener 12 is shown already inserted into the first duct 30.

The first duct fitting 31' has a shoulder 34 leading to a stepped portion, or socket 35, with a larger inner circumference than the outer circumference of the portion of the third seal member 14B' from which the outwardly extending ribs 32 extend. The outwardly extending ribs 32 extend beyond the outer circumference of the socket 35 of the first duct fitting 31'. The inner circumference of the socket 35 is also larger than the outer circumference of the first duct 30. The socket 35 of the first duct fitting 31' allows the duct stiffener 12 and the third seal member 14B' located around the outer circumference of the duct stiffener 12 to be inserted into the third duct fitting 31'.

An end portion 36 of the third seal member 14B' extends at least partially across the end face of the second end 12B of the duct stiffener 12. Further, the end portion 36 of the third seal member 14B' extends around the end face of the second end 12B of the duct stiffener 12 and extends away from the second end 12B of the duct stiffener 12 along the internal circumference of the duct stiffener 12.

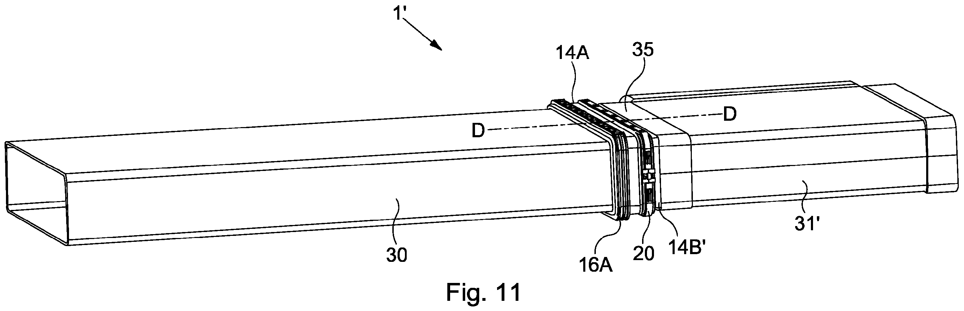

Figure 11 shows the assembled duct system 1' of the duct connector 10', the first duct 30' and the first duct fitting 31'. The first duct fitting 31' shown in Figure 11 is a different type of duct fitting than that shown in Figure 9, but has the socket 35 so functions in the same manner. The duct connector 10' is compatible with different types of duct fittings as long as they are the correct size to form the sealed connection.

To form the seal between the duct stiffener 12 and the first duct fitting 31', the second end 12B of the duct stiffener 12 is inserted into the socket 35 of the first duct fitting 31'. The majority of the third seal member 14B' cannot be seen in Figure 11 because it is located within the socket 35 of the first duct fitting 31'. Thus, the seal between the duct stiffener 12 and the first duct fitting 31' is an internal seal around the internal circumference of the first duct fitting 31'.

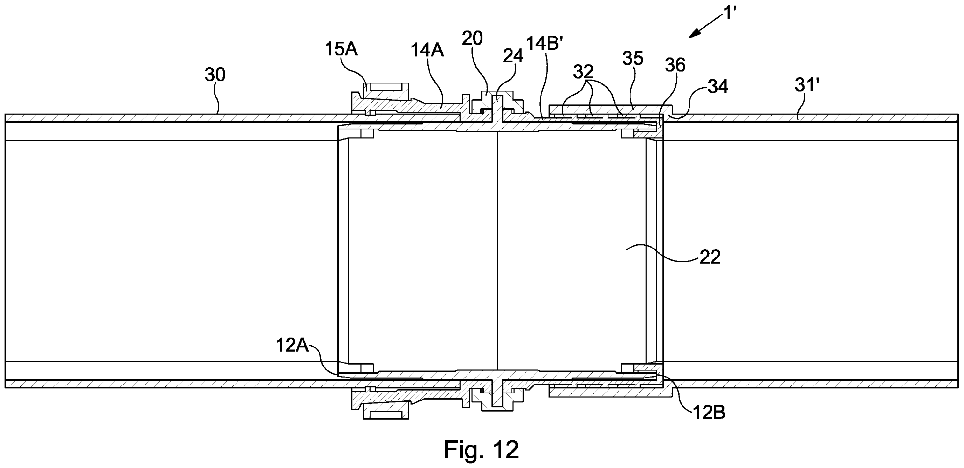

Figure 12 shows a cross section view of the assembled duct system 1' taken along line D-D of Figure 11 and shows the internal seal in more detail.

The second end 12B of the duct stiffener 12 is inserted fully into the socket 35 of the first duct fitting 31', i.e. until the end portion 36 of the third seal member 14B' abuts the shoulder 34 of the first duct fitting 31'.

Once the duct stiffener 12 is inserted into the first duct fitting 31', the outwardly extending ribs 32 come into contact with the inner circumference of the socket 35 of the first duct fitting 31' and are deformed to lie substantially flat against the lengthwise surface of the third seal member 14B' due to the pressure against the first duct fitting 31', which helps provide a strong air/water tight seal. The third seal member 14B' has thus formed the internal seal around the internal circumference of the first duct fitting 31' at the second end 12B of the duct stiffener 12. The bent ribs 32 resist removal of the first duct fitting 31' as they are bent towards the open end.

The external seal has also been formed between the duct stiffener 12 and the duct 30 and thus the duct 30 has been connected to, and sealed with, the first duct fitting 31' via the duct connector 10'. Both the internal seal and the external seal are airtight and watertight.

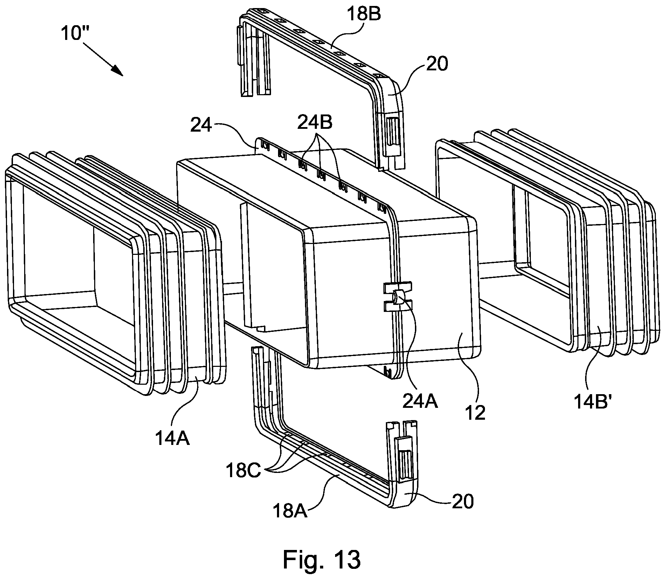

The following example described in relation to Figures 13, 14 and 15 is not explicitly recited in the claims and is included to assist the understanding of the reader and highlight specific aspects of the amended subject-matter. Figure 13 shows an exploded view of a duct fitting-to-duct fitting connector (duct connector 10"). The same reference numerals will be used for the same components as in the first and second embodiments with similar or corresponding components having numerals with two apostrophes (").

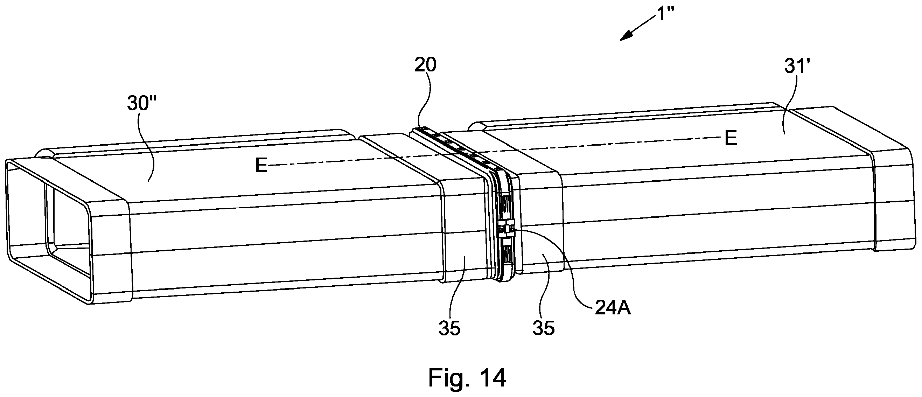

The duct stiffener 12 is the same as in the duct-to-duct connector and the duct-to-duct fitting embodiments. This means that a common platform is provided that forms the basis of each variant of the invention. The second duct component is still a first duct fitting 31' but the first duct component is a second duct fitting 30" (shown in Figure 14). The duct connector 10", the second duct fitting 30" and the first duct fitting 31' form a duct system 1". The duct connector 10" includes the loops 24A and U-shaped clips 18C so fixing members 25 can also be used with this variant of the invention in the same manner as described above.

A fourth seal member 14A" is provided to form the seal between the duct stiffener 12 and the second duct fitting 30". The fourth seal member 14A" is the same as the third seal member 14B', i.e. has three outwardly extending ribs 32 and no flared shape 26.

The duct connector 10" is assembled in the same manner as described previously and the clip 20 attaches both the third seal member 14B' and the fourth seal member 14A" to the duct stiffener 12 in the same way as above.

Figure 14 shows the assembled duct system 1" of the duct component 10", the second duct fitting 30" and the first duct fitting 31'. Two internal seals are formed within the duct fittings 30", 31'.

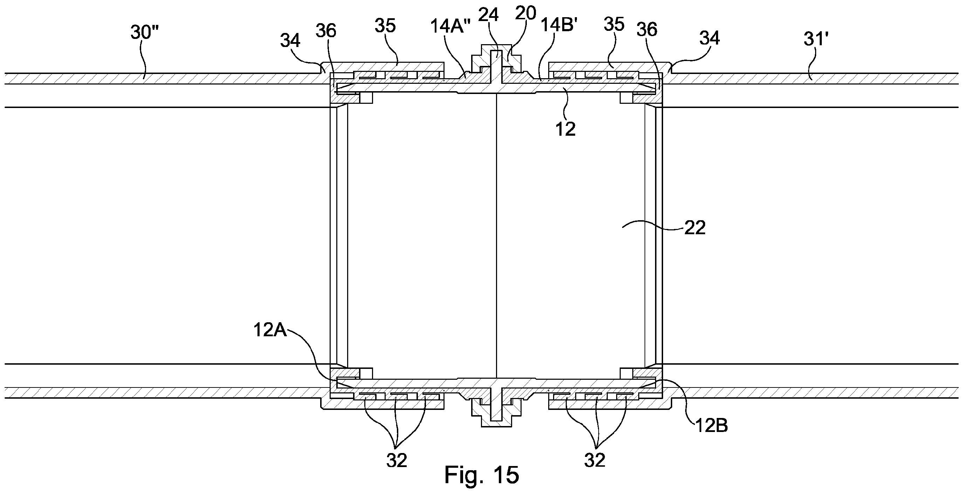

Figure 15 shows a cross section view of the assembled duct system 1" taken along line E-E of Figure 14 and shows the internal seal formed around the internal circumference of the first duct fitting 31' by the third seal member 14B'. In addition, the internal seal formed around the internal circumference of the second duct fitting 30" by a fourth seal member 14A" is shown. Thus, the duct fittings 30", 31' are both connected and sealed by the duct connector 10".

## Claims

1. A duct connector (10) for sealing duct components (30, 31) comprising:
a duct member (12),
a seal member (14A, 14B) for forming a seal between the duct member (12) and a duct component (30, 31), and
a collar (16A, 16B) for compressing the seal member (14A, 14B) onto the duct component (30, 31) to form the seal;
wherein the duct member (12) is hollow, is open at a first end (12A, 12B) and has a length extending away from the first end (12A, 12B),
wherein the seal member (14A, 14B) is located around an outer circumference of the duct member (12),
wherein the seal is an external seal around the outer circumference of the duct component (30, 31) substantially transverse to the length, wherein the collar (16A, 16B) is preferably located around an outer circumference of the seal member (14A, 14B), and
wherein the collar (16A, 16B) is slidable in a lengthwise direction of the duct member (12) from an unsealed position to a sealed position, closer to the first end (12A, 12B) of the duct member (12), to compress the seal member (14A, 14B) onto the duct component (30, 31) to form the external seal.

2. The duct connector (10) according to claim 1, wherein the collar (16A) is slidable from the sealed position to the unsealed position for insertion of the duct member (12) into the duct component (30, 31).

3. The duct connector (10) according to claim 1 or claim 2, wherein a circumferential length of the seal member (14A) transverse to the length of the duct member (12) increases towards the end of the seal member (14A) nearest the first end (12A) of the duct member (12).

4. The duct connector (10) according to any of claims 1-3, wherein the seal member (14A) comprises at least one inwardly and transversely extending rib (28) for forming the external seal.

5. The duct connector (10) according to any preceding claim, wherein the seal member (14A, 14B) is located at, or near, the first end (12A, 12B) of the duct member (12).

6. The duct connector (10) according to any preceding claim, wherein the duct member (12) has an internal crosspiece (22) extending at least partway along the length of the duct member (12).

7. The duct connector (10) according to any preceding claim, wherein the seal member (14A, 14B) is attached to the duct member (12) by a clip (20).

8. The duct connector (10) according to claim 7, wherein the clip (20) is configured to attach the seal member (14A, 14B) at the end of the seal member (14A, 14B) furthest from the first end (12A, 12B) of the duct member (12).

9. The duct connector (10) according to claim 7 or claim 8, wherein the clip (20) is configured to press the seal member (14A, 14B) onto the duct member (12) to seal the seal member (14A, 14B) to the duct member (12).

10. The duct connector (10) according to any of claims 7 to 9, wherein the clip (20) comprises a first retaining clip part (18A) and a second retaining clip part (18B).

11. The duct connector (10) according to any preceding claim, further comprising a fixing member (25) for fixing the duct connector (10) to a surface, and preferably wherein the duct connector (10) comprises a loop (24A) for attachment of the fixing member (25) and/or preferably wherein the duct connector (10) comprises a U-shaped clip (18C) for holding the fixing member (25) in a direction transverse to the length of the duct member (12).

12. A method for sealing duct components (30, 31) using a duct connector (10) according to claims 1 to 11 comprising:
positioning a seal member (14A, 14B) around an outer circumference of a duct member (12), the duct member (12) being hollow and being open at a first end (12A, 12B) of the duct member;
inserting the duct member (12) into the duct component (30, 31) such that the seal member (14A, 14B) forms a seal between the duct member (12) and the duct component (30, 31) at the first end (12A, 12B) of the duct member (12); the seal member (14A, 14B) forming an external seal around the outer circumference of the duct component (30, 31);
compressing the seal member (14A, 14B) onto the duct component (30, 31) to form the external seal between the duct member (12) and the duct component (30, 31) using a collar (16A, 16B); and
sliding the collar (16A, 16B) from an unsealed position to a sealed position, closer to the first end (12A, 12B) of the duct member (12), to deform the seal member (14A, 14B) and form the external seal.

13. The method of claim 12, further comprising sliding the collar (16A, 16B) to the unsealed position from the sealed position, and/or maintaining the collar (16A, 16B) in the unsealed position whilst inserting the duct member (12) into the duct component (30, 31).

14. The method of claim 12 or claim 13, wherein a circumferential length of the seal member (14A, 14B) transverse to the length of the duct member (12) increases towards the end of the seal member (14A, 14B) nearest the first end (12A, 12B) of the duct member (12).

## Patentansprüche

1. Kanalverbinder (10) zum Abdichten von Kanalkomponenten (30, 31), der Folgendes umfasst:
ein Kanalelement (12),
ein Dichtungselement (14A, 14B) zum Bilden einer Dichtung zwischen dem Kanalelement (12) und einer Kanalkomponente (30, 31), und
eine Manschette (16A, 16B) zum Zusammendrücken des Dichtungselements (14A, 14B) auf die Kanalkomponente (30, 31), um die Dichtung zu bilden,
wobei das Kanalelement (12) hohl ist, an einem ersten Ende (12A, 12B) offen ist und eine Länge aufweist, die sich von dem ersten Ende (12A, 12B) weg erstreckt,
wobei sich das Dichtungselement (14A, 14B) um einen Außenumfang des Kanalelements (12) befindet,
wobei die Dichtung eine äußere Dichtung um den Außenumfang der Kanalkomponente (30, 31), im Wesentlichen quer zu der Länge, ist, wobei sich die Manschette (16A, 16B) vorzugsweise um einen Außenumfang des Dichtungselements (14A, 14B) befindet, und
wobei die Manschette (16A, 16B) in einer Längsrichtung des Kanalelements (12) verschiebbar ist von einer nichtabgedichteten Stellung zu einer abgedichteten Stellung, näher zu dem ersten Ende (12A, 12B) des Kanalelements (12), um das Dichtungselement (14A, 14B) auf die Kanalkomponente (30, 31) zusammenzudrücken, um die äußere Dichtung zu bilden.

2. Kanalverbinder (10) nach Anspruch 1, wobei die Manschette (16A) zum Einsetzen des Kanalelements (12) in die Kanalkomponente (30, 31) von der abgedichteten Stellung zu der nichtabgedichteten Stellung verschiebbar ist.

3. Kanalverbinder (10) nach Anspruch 1 oder Anspruch 2, wobei eine Umfangslänge des Dichtungselements (14A), quer zu der Länge des Kanalelements (12), zu dem Ende des Dichtungselements (14A) hin, das dem ersten Ende (12A) des Kanalelements (12) am nächsten ist, zunimmt.

4. Kanalverbinder (10) nach einem der Ansprüche 1 bis 3, wobei das Dichtungselement (14A) mindestens eine sich nach innen und quer erstreckende Rippe (28) zum Bilden der äußeren Dichtung umfasst.

5. Kanalverbinder (10) nach einem der vorhergehenden Ansprüche, wobei sich das Dichtungselement (14A, 14B) an oder nahe dem ersten Ende (12A, 12B) des Kanalelements (12) befindet.

6. Kanalverbinder (10) nach einem der vorhergehenden Ansprüche, wobei das Kanalelement (12) ein inneres Querstück (22) aufweist, das sich mindestens teilweise entlang der Länge des Kanalelements (12) erstreckt.

7. Kanalverbinder (10) nach einem der vorhergehenden Ansprüche, wobei das Dichtungselement (14A, 14B) durch eine Klammer (20) an dem Kanalelement (12) angebracht ist.

8. Kanalverbinder (10) nach Anspruch 7, wobei die Klammer (20) dafür konfiguriert ist, das Dichtungselement (14A, 14B) an dem Ende des Dichtungselements (14A, 14B) anzubringen, das von dem ersten Ende (12A, 12B) des Kanalelements (12) am weitesten entfernt ist.

9. Kanalverbinder (10) nach Anspruch 7 oder Anspruch 8, wobei die Klammer (20) dafür konfiguriert ist, das Dichtungselement (14A, 14B) auf das Kanalelement (12) zu pressen, um das Dichtungselement (14A, 14B) zu dem Kanalelement (12) abzudichten.

10. Kanalverbinder (10) nach einem der Ansprüche 7 bis 9, wobei die Klammer (20) einen ersten Halteklammerteil (18A) und einen zweiten Halteklammerteil (18B) umfasst.

11. Kanalverbinder (10) nach einem der vorhergehenden Ansprüche, der ferner ein Fixierelement (25) zum Fixieren des Kanalverbinders (10) an einer Oberfläche umfasst, und vorzugsweise, wobei der Kanalverbinder (10) eine Öse (24A) zum Befestigen des Fixierelements (25) umfasst und/oder vorzugsweise, wobei der Kanalverbinder (10) eine U-förmige Klammer (18C) zum Halten des Fixierelements (25) in einer Richtung quer zu der Länge des Kanalelements (12) umfasst.

12. Verfahren zum Abdichten von Kanalkomponenten (30, 31) unter Verwendung eines Kanalverbinders (10) nach einem der Ansprüche 1 bis 11, das Folgendes umfasst:
Positionieren eines Dichtungselements (14A, 14B) um einen Außenumfang eines Kanalelements (12), wobei das Kanalelement (12) hohl ist und an einem ersten Ende (12A, 12B) des Kanalelements offen ist;
Einsetzen des Kanalelements (12) in die Kanalkomponente (30, 31) derart, dass das Dichtungselement (14A, 14B) eine Dichtung zwischen dem Kanalelement (12) und der Kanalkomponente (30, 31) an dem ersten Ende (12A, 12B) des Kanalelements (12) bildet; wobei das Dichtungselement (14A, 14B) eine äußere Dichtung um den Außenumfang der Kanalkomponente (30, 31) bildet;
Zusammendrücken des Dichtungselements (14A, 14B) auf die Kanalkomponente (30, 31), um die äußere Dichtung zwischen dem Kanalelement (12) und der Kanalkomponente (30, 31) zu bilden, unter Verwendung einer Manschette (16A, 16B); und
Verschieben der Manschette (16A, 16B) von einer nichtabgedichteten Stellung zu einer abgedichteten Stellung, näher zu dem ersten Ende (12A, 12B) des Kanalelements (12), um das Dichtungselement (14A, 14B) zu verformen und die äußere Dichtung zu bilden.

13. Verfahren nach Anspruch 12, das ferner das Verschieben der Manschette (16A, 16B) zu der nichtabgedichteten Stellung von der abgedichteten Stellung, und/oder das Halten der Manschette (16A, 16B) in der nichtabgedichteten Stellung während des Einsetzens des Kanalelements (12) in die Kanalkomponente (30, 31) umfasst.

14. Verfahren nach Anspruch 12 oder Anspruch 13, wobei eine Umfangslänge des Dichtungselements (14A, 14B) quer zu der Länge des Kanalelements (12) zu dem Ende des Dichtungselements (14A, 14B) hin, das dem ersten Ende (12A, 12B) des Kanalelements (12) am nächsten ist, zunimmt.

## Revendications

1. Connecteur de conduit (10) pour sceller des composants de conduit (30, 31) comprenant :
un élément de conduit (12),
un élément d'étanchéité (14A, 14B) pour former un joint entre l'élément de conduit (12) et un composant de conduit (30, 31), et
un collier (16A, 16B) pour comprimer l'élément d'étanchéité (14A, 14B) sur le composant de conduit (30, 31) pour former le joint ;
dans lequel l'élément de conduit (12) est creux, ouvert à une première extrémité (12A, 12B) et a une longueur s'étendant à l'écart de la première extrémité (12A, 12B),
dans lequel l'élément d'étanchéité (14A, 14B) est situé autour d'une circonférence extérieure de l'élément de conduit (12),
dans lequel le joint est un joint externe autour de la circonférence extérieure du composant de conduit (30, 31) sensiblement transversale à la longueur, dans lequel le collier (16A, 16B) est de préférence situé autour d'une circonférence extérieure de l'élément d'étanchéité (14A, 14B), et
dans lequel le collier (16A, 16B) peut coulisser dans un sens de la longueur de l'élément de conduit (12) d'une position non scellée à une position scellée, plus proche de la première extrémité (12A, 12B) de l'élément de conduit (12), pour comprimer l'élément d'étanchéité (14A, 14B) sur le composant de conduit (30, 31) pour former le joint externe.

2. Connecteur de conduit (10) selon la revendication 1, dans lequel le collier (16A) peut coulisser de la position scellée à la position non scellée pour l'insertion de l'élément de conduit (12) dans le composant de conduit (30, 31).

3. Connecteur de conduit (10) selon la revendication 1 ou la revendication 2, dans lequel une longueur circonférentielle de l'élément d'étanchéité (14A) transversale à la longueur de l'élément de conduit (12) augmente vers l'extrémité de l'élément d'étanchéité (14A) la plus proche de la première extrémité (12A) de l'élément de conduit (12).

4. Connecteur de conduit (10) selon l'une quelconque des revendications 1 à 3, dans lequel l'élément d'étanchéité (14A) comprend au moins une nervure (28) s'étendant vers l'intérieur et transversalement pour former le joint externe.

5. Connecteur de conduit (10) selon l'une quelconque des revendications précédentes, dans lequel l'élément d'étanchéité (14A, 14B) est situé à, ou à proximité de, la première extrémité (12A, 12B) de l'élément de conduit (12).

6. Connecteur de conduit (10) selon l'une quelconque des revendications précédentes, dans lequel l'élément de conduit (12) a une traverse interne (22) s'étendant au moins en partie le long de la longueur de l'élément de conduit (12).

7. Connecteur de conduit (10) selon l'une quelconque des revendications précédentes, dans lequel l'élément d'étanchéité (14A, 14B) est fixé à l'élément de conduit (12) par une agrafe (20).

8. Connecteur de conduit (10) selon la revendication 7, dans lequel l'agrafe (20) est configurée pour fixer l'élément d'étanchéité (14A, 14B) à l'extrémité de l'élément d'étanchéité (14A, 14B) la plus éloignée de la première extrémité (12A, 12B) de l'élément de conduit (12).

9. Connecteur de conduit (10) selon la revendication 7 ou la revendication 8, dans lequel l'agrafe (20) est configurée pour presser l'élément d'étanchéité (14A, 14B) sur l'élément de conduit (12) pour sceller l'élément d'étanchéité (14A, 14B) à l'élément de conduit (12).

10. Connecteur de conduit (10) selon l'une quelconque des revendications 7 à 9, dans lequel l'agrafe (20) comprend une première partie d'agrafe de retenue (18A) et une deuxième partie d'agrafe de retenue (18B).

11. Connecteur de conduit (10) selon l'une quelconque des revendications précédentes, comprenant en outre un élément de fixation (25) pour fixer le connecteur de conduit (10) à une surface, et de préférence dans lequel le connecteur de conduit (10) comprend une boucle (24A) pour la fixation de l'élément de fixation (25) et/ou de préférence dans lequel le connecteur de conduit (10) comprend une agrafe en forme de U (18C) pour maintenir l'élément de fixation (25) dans un sens transversal à la longueur de l'élément de conduit (12).

12. Procédé d'étanchéité de composants de conduit (30, 31) en utilisant un connecteur de conduit (10) selon les revendications 1 à 11, comprenant les étapes consistant à :
positionner un élément d'étanchéité (14A, 14B) autour d'une circonférence extérieure d'un élément de conduit (12), l'élément de conduit (12) étant creux et ouvert à une première extrémité (12A, 12B) de l'élément de conduit ;
insérer l'élément de conduit (12) dans le composant de conduit (30, 31) de telle sorte que l'élément d'étanchéité (14A, 14B) forme un joint entre l'élément de conduit (12) et le composant de conduit (30, 31) à la première extrémité (12A, 12B) de l'élément de conduit (12) ; l'élément d'étanchéité (14A, 14B) formant un joint externe autour de la circonférence extérieure du composant de conduit (30, 31) ;
comprimer l'élément d'étanchéité (14A, 14B) sur le composant de conduit (30, 31) pour former le joint externe entre l'élément de conduit (12) et le composant de conduit (30, 31) en utilisant un collier (16A, 16B) ; et
faire glisser le collier (16A, 16B) d'une position non scellée à une position scellée, plus proche de la première extrémité (12A, 12B) de l'élément de conduit (12), pour déformer l'élément d'étanchéité (14A, 14B) et former le joint externe.

13. Procédé selon la revendication 12, comprenant en outre le fait de faire glisser le collier (16A, 16B) de la position scellée à la position non scellée, et/ou le maintien du collier (16A, 16B) dans la position non scellée pendant l'insertion de l'élément de conduit (12) dans le composant de conduit (30, 31).

14. Procédé selon la revendication 12 ou selon la revendication 13, dans lequel une longueur circonférentielle de l'élément d'étanchéité (14A, 14B) transversale à la longueur de l'élément de conduit (12) augmente vers l'extrémité de l'élément d'étanchéité (14A, 14B) la plus proche de la première extrémité (12A, 12B) de l'élément de conduit (12).
